# EUROPÄISCHE PATENTSCHRIFT

(11) **EP 2 159 442 B1**
(45) Veröffentlichungstag und Bekanntmachung des Hinweises auf die Patenterteilung: **13.06.2012**
(21) Anmeldenummer: 09168636.0
(22) Anmeldetag: 25.08.2009
(51) Int. Cl.: F16F 1/38, F16F 1/54

(54) **Aggregatlager**
Unit bearing
Unité de support

(30) Priorität: 01.09.2008 DE 102008045341
(43) Veröffentlichungstag der Anmeldung: 03.03.2010
(73) Patentinhaber: Trelleborg Automotive Germany GmbH, 64747 Breuberg (DE)
(72) Erfinder: Müller, Michael, 56427, Siershahn (DE)
(74) Vertreter: Preissner, Nicolaus

(56) Entgegenhaltungen:
- EP-A1- 1 852 629
- DE-U1- 20 304 481
- US-A- 2 478 108

## Beschreibung

Die Erfindung betrifft ein Aggregatlager, insbesondere Motorlager für Nutzfahrzeuge, mit einem Lagerkern, der über eine elastomere Tragfeder an einem Gehäuse abgestützt ist, wobei in dem Lagerkern eine Befestigungsmutter zur Aufnahme einer Befestigungsschraube angeordnet ist.

Ein derartiges Aggregatlager geht aus der DE 102 49 387 B3 hervor. Das Lager weist einen Lagerkern aus Aluminium, eine den Lagerkern abstützende elastomere Tragfeder und ein Gehäuse auf. In dem Lagerkern ist ein pentagonaler Durchgang vorgesehen, in die ein Stützarm formschlüssig und verdrehsicher einführbar ist. Über den Stützarm wird das zu lagernde Aggregat mit dem Lager verbunden. Zur Fixierung des Stützarms in dem Lagerkern wird dieser in den Durchgang eingeschoben. Alternativ ist die Tragfeder mit einer hervorstehenden Lasche ausgebildet, in die ein am Stützarm ausgebildeter Rastnocken formschlüssig in die Öffnung einrastbar ist.

In der US 2,478,108 ist ein Aggregatlager offenbart, das eine Bodenplatte, einen Lagerkern und eine die Bodenplatte und den Lagerkern miteinander verbindende Elastomerschicht umfasst. Der Lagerkern ist als T-förmiger Kanal zur Aufnahme eines Schraubkopfes eines Schraubbolzens ausgebildet.

In der EP 1 852 629 A1 ist ein Aggregatlager offenbart, das ein Traglager, ein Auflager und einen das Traglager und das Auflager miteinander verbindenden Federkörper umfasst. In das Traglager sind zwei Befestigungsmuttern zur Aufnahme von Befestigungsschrauben stoffschlüssig eingebracht.

Im Nutzfahrzeugbereich werden derartige Aggregatlager der eingangs genannten Art zur Lagerung eines Motors für längs eingebaute Nutzfahrzeugmotoren verwendet. Zur Festlegung des Motors an dem Aggregatlager werden als Befestigungselemente entweder Gewindebuchsen in den Lagerkern eingegossen, Gewindeeinsätze in ein in den Lagerkern eingebrachtes Gewinde montiert oder ein Blech mit daran aufgeschweißten Muttern an dem Lagerkern befestigt. Hierbei ist nachteilig, dass im Fall eines defekten Befestigungselements das Fahrzeug aus der Montagelinie genommen werden muss, um das komplette Aggregatlager auszutauschen.

Der Erfindung liegt die Aufgabe zu Grunde, ein Aggregatlager der eingangs genannten Art dahingehend weiterzubilden, dass im Fall eines defekten Befestigungselements dieses leicht ausgetauscht werden kann.

Zur Lösung dieser Aufgabe wird vorgeschlagen, dass in dem Lagerkern eine Aussparung eingebracht ist, dass die Aussparung über eine Stirnseite des Lagerkerns zugänglich ist, dass die Befestigungsmutter über die Stirnseite in die Aussparung einsetzbar und entfernbar ist und verdrehsicher in der Aussparung gehalten wird und dass in die Aussparung eine Bohrung zur Durchführung einer Befestigungsschraube mündet.

Vorteilhafte Ausgestaltungen sind Gegenstand der Unteransprüche.

Durch die erfindungsgemäße Ausgestaltung wird ein Aggregatlager erhalten, das eine in den Lagerkern eingebrachte Aussparung aufweist, in die eine Befestigungsmutter oder Befestigungsschraube verdrehsicher einsetzbar ist. Die Aussparung ist so ausgebildet, dass das Befestigungselement einfach eingesetzt und ausgetauscht werden kann. Im Fall eines defekten Befestigungselements muss nicht, wie eingangs beschrieben, das vollständige Fahrzeug aus der Montagelinie genommen werden, sondern es wird einfach das defekte Befestigungselement ausgetauscht. Die verwendeten Befestigungselemente sind als kostengünstige Massenware erhältlich, so dass die Konstruktion und Herstellung speziell gestalteter Befestigungselemente entfällt. Des Weiteren weist das Lager einen einfachen und kostengünstigen Aufbau auf. Darüber hinaus ist eine derartige Aussparung einfach und kostengünstig herzustellen, da lediglich Formkerne in Form des Befestigungselements in die Gussform eingesetzt werden. Durch die formschlüssige und verdrehsichere Aufnahme des Befestigungselements ist kein zusätzliches Werkzeug zum Festhalten des Befestigungselements notwendig. Mittels der in die Aussparung mündenden Bohrung kann vorteilhaft das in der Aussparung eingebrachte Befestigungselement mit einem weiteren Befestigungselement verbunden werden, um so ein Aggregat an dem Lager festzulegen. Der Zugang zu der Aussparung über die Stirnseite ermöglicht einen einfacheren Zugang für die Montage eines Aggregats an dem Lagerkern, sowie einen einfacheren Austausch des Befestigungselements.

Die Aussparung ist derart vorteilhaft ausgebildet, dass im eingeschobenen Zustand des Befestigungselements ein verbleibender Freiraum ausgebildet ist. Der Freiraum ermöglicht eine leichtere Zugänglichkeit für den Austausch des Befestigungselements entweder per Hand oder unter Zuhilfenahme eines Werkzeugs.

Vorteilhaft weist der Lagerkern mindestens zwei Aussparungen auf. Durch die Bereitstellung zweier Aussparungen können entsprechend zwei Befestigungselemente eingesetzt werden. Dadurch können sowohl höhere statische als auch dynamische Kräfte übertragen werden.

Bei einer vorteilhaften Ausgestaltung ist die Aussparung derart ausgebildet, dass das Befestigungselement in Einschubrichtung beweglich aufgenommen ist. Durch die Beweglichkeit des Befestigungselements in Einschubrichtung wird ein Toleranzausgleich ermöglicht.

Vorteilhaft ist der Lagerkern aus einem metallischen Gusswerkstoff, vorzugsweise aus Aluminiumdruckguss gebildet. Einerseits wird durch die Fertigung des Lagerkerns mittels Gießen eine kostengünstige und materialsparende Herstellung desselbigen gewährleistet. Andererseits wird durch die Verwendung von Aluminiumdruckguss das Gewicht des Aggregatlagers reduziert und es ist keine maschinelle Nacharbeit erforderlich.

Nachfolgend wird die Erfindung anhand eines Ausführungsbeispiels näher erläutert, das in den Zeichnungen schematisch dargestellt ist. Hierbei zeigen:
Fig. 1 eine Vorderansicht des erfindungsgemäßen Aggregatlagers mit zwei in den Aussparungen befindlichen Befestigungsmuttern, wobei eine der Befestigungsmuttern mit einer Standard Flanschschraube verbundenen ist;
Fig. 2 eine perspektivische Ansicht des Lagerkerns gemäß Fig. 1;
Fig. 3 einen Vertikalschnitt durch den in Fig. 2 gezeigten Lagerkern; und
Fig. 4 eine perspektivische Darstellung eines erfindungsgemäßen Aggregatlagers.

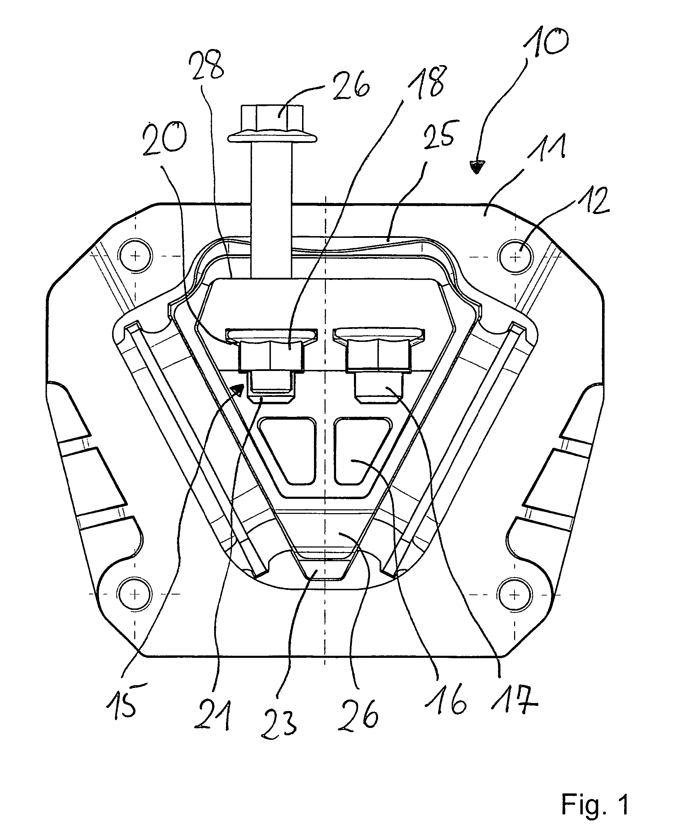

Fig. 1 zeigt ein Aggregatlager 10 in einer Vorderansicht mit einem Gehäuse 11, einer Tragfeder 13 und einem Lagerkern 15. Das Gehäuse 11 hat an seiner Stirnseite vier Bohrungen 12, die zur Festlegung des Aggregatlagers 10 an einem nicht näher dargestellten Nutzfahrzeug dienen. Zudem weist das Gehäuse 11 eine näherungsweise trapezförmige Aussparung 25 auf, in die die Tragfeder 13 und der Lagerkern 15 eingebracht sind. Die Tragfeder 13 dient zur Abstützung des Lagerkerns 15 an dem Gehäuse 11, sowie zur Aufnahme der von dem Längsträger abgegebenen statischen Kräfte und zur Isolierung von Schwingungen. Hierzu ist die Tragfeder 13 zwischen dem Gehäuse 11 und dem Lagerkern 15 einvulkanisiert.

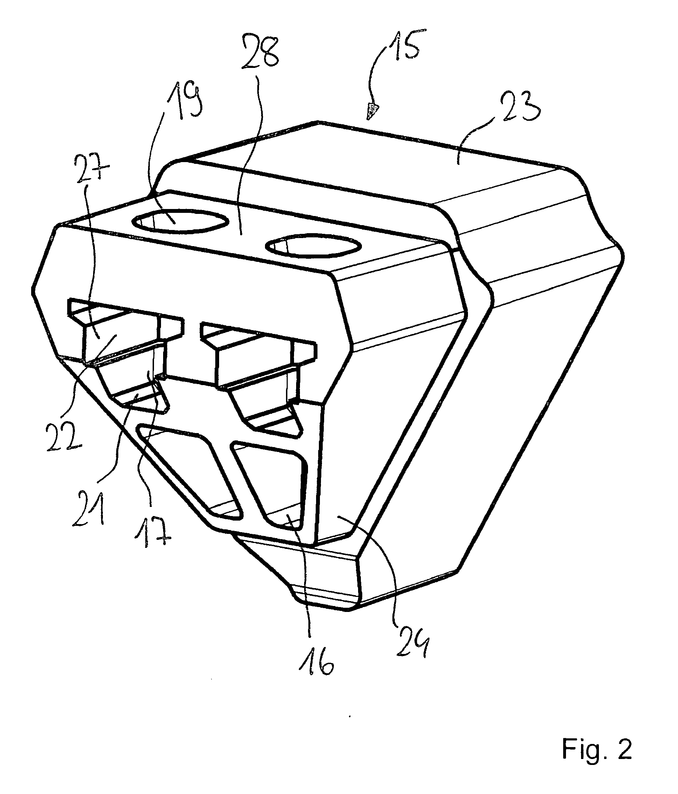

In Fig. 2 ist der näherungsweise trapezförmige Lagerkern 15 in perspektivischer Ansicht dargestellt, der einen großen, in der Figur hinten liegenden trapezförmigen Körper 23 und einen kleinen, in der Figur vorne liegenden trapezförmigen Körper 24 aufweist. An dem großen trapezförmigen Körper 23 ist die Tragfeder 15 anvulkanisiert. Der kleine trapezförmige Körper 24 weist an seiner Stirnseite zwei Ausnehmungen 16 und zwei darüberliegende Aussparungen 17 auf. Die beiden Ausnehmungen 16 sind zum Zweck der Materialeinsparung eingebracht.

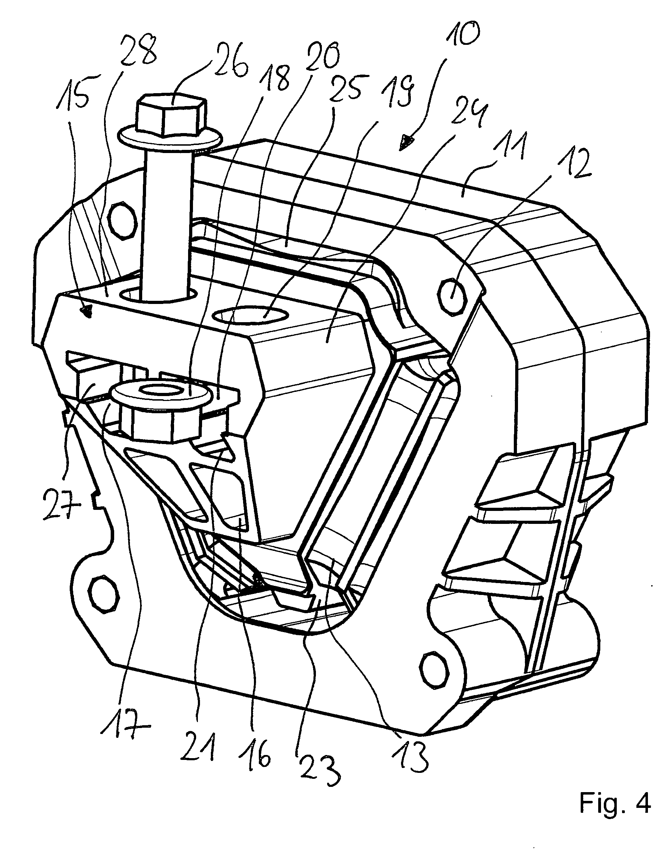

Die in den Lagerkern 15 eingebrachten Aussparungen 17 sind von der Stirnseite des Lagerkerns 15 zugänglich. Die Aussparungen 17 lassen sich in einen ersten Aussparungsbereich 20 und einen zweiten Aussparungsbereich 21 unterteilen. Der erste Aussparungsbereich 20 ist, wie aus Fig. 1 hervorgeht, derart T-förmig ausgebildet, dass als Befestigungselement eine Befestigungsmutter 18 eingesetzt werden kann, die in Fig.1 und 4 gezeigt ist. Bei dem Befestigungselement 18 handelt es sich um eine Standard-Flanschmutter.

Der erste Aussparungsbereich 20 ist in Einschubrichtung länger als die Befestigungsmutter 18 ausgebildet, um einen Toleranzausgleich zu ermöglichen. In einer weiteren nicht dargestellten Ausführungsform kann vorgesehen sein, dass die Aussparung 17 derart ausgebildet ist, dass anstelle einer Befestigungsmutter 18, eine Befestigungsschraube 26 eingesetzt werden kann.

Der zweite Aussparungsbereich 21 ist rechteckförmig ausgebildet und erleichtert den Austausch einer defekten Befestigungsmutter 18, beispielsweise per Hand oder durch Zuhilfenahme eines geeigneten Werkzeugs.

Zur Erzeugung der Aussparungen 17 in dem Lagerkern 15 werden je nach Form der Befestigungselemente 18, 26 entsprechende Formkerne in eine nicht näher dargestellte Gussform eingesetzt.

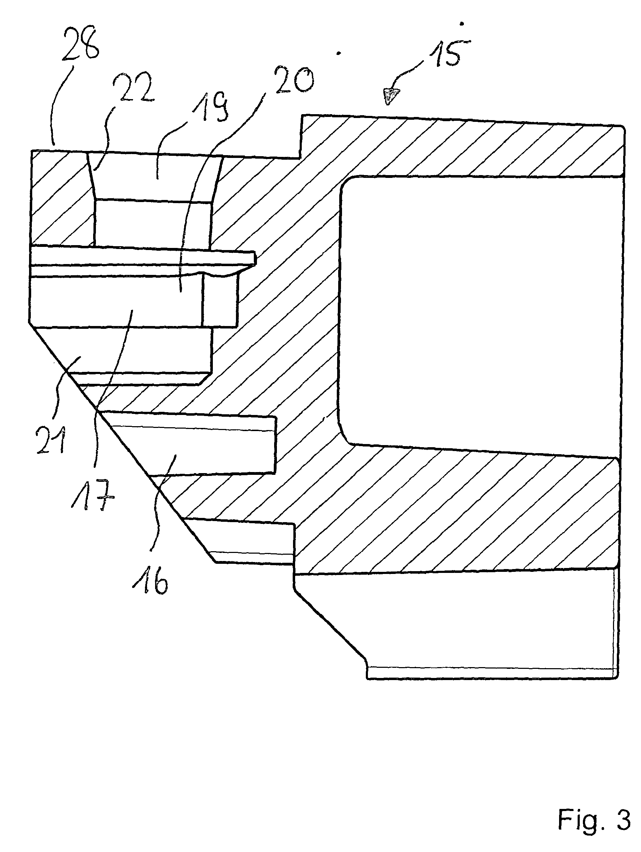

In den ersten Aussparungsbereich 20 mündet eine Bohrung 19, wie in Fig. 3 dargestellt. Die Bohrung 19 ist senkrecht zu einer Oberseite 28 des kleinen trapezförmigen Körpers 24 eingebracht. Die Bohrung 19 weist einen kegelförmigen Öffnungsbereich 22 auf, der das Einführen einer Befestigungsschraube 26 erleichtert, die mit dem nicht dargestellten Motor verbunden ist.

Fig. 4 zeigt, wie die Befestigungsmutter 18 in die Aussparung 17 formschlüssig und verdrehsicher eingesetzt wird, so dass jeweils zwei parallel gegenüberliegende Seiten der Befestigungsmutter 18 mit einer Innenwandung 27 der Aussparung 17 einen formschlüssigen Flächenkontakt aufweisen. Nachdem die Befestigungsschraube18 in den ersten Aussparungsbereich 20 eingeschoben worden ist, wird von oben über die Bohrung 19 eine Befestigungsschraube 26 eingeführt und mit der Befestigungsmutter 18 verschraubt.

Das vorstehend beschriebene Aggregatlager 10 ermöglicht infolge der in den Lagerkern 15 eingebrachten Aussparung 17 ein einfaches Einsetzen und Entfernen einer Befestigungsmutter 18. Im Fall einer defekten Befestigungsmutter 18 kann diese somit leicht ausgetauscht werden. Die verwendeten Befestigungselemente, d. h. die Befestigungsmutter 18 und die Befestigungsschraube 26, sind Standardbauteile und somit kostengünstig.

### Bezugszeichenliste

- 10: Aggregatlager
- 11: Gehäuse
- 12: Bohrung
- 13: Tragfeder
- 15: Lagerkern
- 16: Ausnehmung
- 17: Aussparung
- 18: Befestigungsmutter
- 19: Bohrung
- 20: ersten Aussparungsbereich
- 21: zweiten Aussparungsbereich
- 22: kegelförmiger Öffnungsbereich
- 23: großer trapezförmiger Körper
- 24: kleiner trapezförmiger Körper
- 25: trapezförmige Aussparung
- 26: Befestigungsschraube
- 27: Innenwandung
- 28: Oberseite

## Patentansprüche

1. Aggregatlager (10), insbesondere Motorlager für Nutzfahrzeuge, mit einem Lagerkern (15), der über eine elastomere Tragfeder (13) an einem Gehäuse (11) abgestützt ist, wobei in dem Lagerkern eine Befestigungsmutter (18) zur Aufnahme einer Befestigungsschraube (26) angeordnet ist,
**dadurch gekennzeichnet,**
**dass** in dem Lagerkern (15) eine Aussparung (17) eingebracht ist, dass die Aussparung (17) über eine Stirnseite des Lagerkerns (15) zugänglich ist,
**dass** die Befestigungsmutter (18) über die Stirnseite in die Aussparung (17) einsetzbar und entfernbar ist und verdrehsicher in der Aussparung (17) gehalten wird und
**dass** in die Aussparung (17) eine Bohrung (19) zur Durchführung einer Befestigungsschraube (26) mündet.

2. Aggregatlager (10) nach einem der voranstehenden Ansprüche, **dadurch gekennzeichnet, dass** die Aussparung (17) derart ausgebildet ist, dass im eingeschobenen Zustand des Befestigungselements (18, 26) ein verbleibender Freiraum (21) ausgebildet ist.

3. Aggregatlager (10) nach einem der voranstehenden Ansprüche, **dadurch gekennzeichnet, dass** der Lagerkern (15) mindestens zwei Aussparungen (17) aufweist.

4. Aggregatlager (10) nach einem der voranstehenden Ansprüche, **dadurch gekennzeichnet, dass** die Aussparung (17) derart ausgebildet ist, dass das Befestigungselement (18, 26) in Einschubrichtung beweglich aufgenommen ist.

5. Aggregatlager (10) nach einem der voranstehenden Ansprüche, **dadurch gekennzeichnet, dass** der Lagerkern (15) aus einem metallischen Gusswerkstoff, vorzugsweise Aluminiumdruckguss, gebildet ist.

## Claims

1. Unit bearing (10), in particular an engine mounting for commercial vehicles, having a mounting core (15) which is supported on a housing (11) by means of an elastomer carrier (13), wherein a fastening nut (18) is arranged in the mounting core to accommodate a fastening bolt (26),
**characterised in that**
a recess (17) is provided in the mounting core (15),
the recess (17) is accessible via a front side of the mounting core (15),
the fastening nut (18) can be inserted and removed via the front side of the recess (17) and is held rotation-proof in the recess (17) and a drilled hole (19) for the passage of a fastening bolt (26) opens into the recess (17).

2. Unit bearing (10) according to one of the preceding claims **characterised in that** the recess (17) is designed such that when the fastening element (18, 26) is inserted a remaining free space (21) is formed.

3. Unit bearing (10) according to one of the preceding claims **characterised in that** the mounting core (15) has at least two recesses (17).

4. Unit bearing (10) according to one of the preceding claims **characterised in that** the recess (17) is so configured that the fastening element (18, 26) is movably accommodated in the direction of insertion.

5. Unit bearing (10) according to one of the preceding claims **characterised in that** the mounting core (15) is formed of a metallic cast material, preferably die cast aluminium.

## Revendications

1. Palier de groupe (10), en particulier palier de moteur pour véhicules utilitaires, comprenant un noyau de palier (15) qui est soutenu sur un boîtier (11) via un ressort de support élastomère (13), avec un écrou de fixation (18) agencé dans le noyau de palier pour la réception d'une vis de fixation (26),
**caractérisé en ce que**
une échancrure (17) est ménagée dans le noyau de palier (15), l'échancrure (17) est accessible via un côté frontal du noyau de palier (15), l'écrou de fixation (18) peut être mis en place dans l'échancrure (17) et enlevé via le côté frontal, et est maintenu dans l'échancrure (17) sans possibilité de rotation, et
un perçage (19) pour la traversée d'une vis de fixation (26) débouche dans l'échancrure (17).

2. Palier de groupe (10) selon la revendication précédente, **caractérisé en ce que** l'échancrure (17) est réalisée de telle manière que, dans la situation introduite de l'élément de fixation (18, 26), il se forme un espace libre résiduel (21).

3. Palier de groupe (10) selon l'une des revendications précédentes, **caractérisé en ce que** le noyau de palier (15) comporte au moins deux échancrures (17).

4. Palier de groupe (10) selon l'une des revendications précédentes, **caractérisé en ce que** l'échancrure (17) est réalisée de telle façon que l'élément de fixation (18, 26) et reçu de façon mobile dans la direction d'introduction.

5. Palier de groupe (10) selon l'une des revendications précédentes, **caractérisé en ce que** le noyau de palier (15) est réalisé en un matériau de fonderie métallique, de préférence en aluminium coulé sous pression.
